# FASCICULE DE BREVET EUROPEEN

(11) **EP 4 113 564 B1**
(45) Date de publication et mention de la délivrance du brevet: **30.04.2025**
(21) Numéro de dépôt: 22181418.9
(22) Date de dépôt: 28.06.2022
(51) Int. Cl.: H01H 39/00

(54) **ENSEMBLE COUPE-CIRCUIT PYROTECHNIQUE POUR AERONEF, ET AERONEF COMPRENANT UN TEL ENSEMBLE**
PYROTECHNISCHE SICHERUNGSEINHEIT FÜR EIN LUFTFAHRZEUG UND LUFTFAHRZEUG MIT EINER SOLCHEN EINHEIT
PYROTECHNICAL CIRCUIT BREAKER ASSEMBLY FOR AIRCRAFT, AND AIRCRAFT COMPRISING SUCH AN ASSEMBLY

(30) Priorité: 30.06.2021 FR 2107084
(43) Date de publication de la demande: 04.01.2023
(73) Titulaire: Airbus Operations SAS, 31060 Toulouse (FR)
(72) Inventeur: ROUSSET, David, 31060 TOULOUSE (FR); LACOSTE, Jean-Marc, 31060 TOULOUSE (FR)
(74) Mandataire: Cabinet Le Guen Maillet

(56) Documents cités:
- EP-A1- 3 525 223
- FR-A1- 2 953 322
- FR-A1- 2 953 324
- FR-A1- 3 051 282
- FR-A1- 3 088 592

## Description

### DOMAINE TECHNIQUE

La présente invention concerne un système et un procédé de protection de circuits électriques. L'invention concerne plus particulièrement un ensemble coupe-circuit électrique apte à isoler une ligne électrique en défaut dans un circuit électrique d'un aéronef. L'invention concerne également un aéronef comprenant un tel ensemble coupe-circuit électrique.

### ETAT DE LA TECHNIQUE ANTERIEURE

Les besoins en puissance électrique à bord d'un aéronef sont en constante augmentation, ce qui conduit à augmenter les niveaux de tension des sources électriques pour maintenir des niveaux de courant acceptables pour le transport de l'énergie entre une source et les dispositifs consommateurs qui y sont reliés. En cas d'incident sur une ligne électrique, et d'augmentation anormale du courant dans cette ligne, il convient d'isoler la ligne pour éviter la propagation du défaut à d'autres éléments du circuit électrique. Les moyens habituellement utilisés pour ce faire ne satisfont plus aux spécificités d'un usage à bord d'un aéronef, eu égard au niveau de plus en plus élevé des tensions et courants mis en œuvre. Aux fins d'isoler une ligne électrique en défaut, des protections électriques comprenant un élément pyrotechnique sont utilisées dans l'industrie automobile. L'avantage de l'élément pyrotechnique est qu'il permet d'opérer très rapidement. Ces systèmes utilisent un capteur de courant configuré pour mesurer le courant consommé dans une ligne électrique de sorte que, lorsqu'une augmentation soudaine et importante du courant est détectée, un module de contrôle active un actuateur (ou actionneur) d'un ensemble coupe-circuit disposé sur la ligne de courant, lequel sectionne physiquement la ligne de courant. L'actuateur est activé par un élément pyrotechnique, ce qui confère à l'ensemble court-circuit un temps d'activation très bref et permet en conséquence d'isoler rapidement la ligne électrique défectueuse du reste du circuit électrique avant une propagation du défaut.

Des dispositifs équivalents existent dans les aéronefs, tels que, par exemple, des disjoncteurs télécommandés, parfois appelés RCCB, du sigle anglais et qui signifie « *Remote Control Circuit Breaker »,* de type électromécanique, ou encore des contrôleurs de puissance à semiconducteurs, parfois appelés SSPC, du sigle anglais, et qui signifie « *Solid State Power Controller* »*.* Ces dispositifs opèrent classiquement des fonctions de protection de câbles ou de bus d'alimentation, ou encore de commutation de charges, de détection d'arcs électriques, etc.

Il est connu que l'ouverture d'un circuit parcouru par un courant peut générer des surtensions importantes du fait du caractère inductif du circuit. Une telle surtension, lors de l'ouverture d'une ligne d'alimentation électrique, est d'autant plus élevée que l'inductance de la ligne électrique est grande et que les capacités parasites sont réduites. La surtension aux bornes d'un point d'ouverture d'une ligne d'alimentation peut être destructrice pour des éléments du circuit. Très souvent, la majeure partie de l'énergie emmagasinée dans une ligne électrique se dissipe dans l'arc de rupture au moment d'une ouverture de la ligne. Le reste de l'énergie se dissipe dans le reste du circuit électrique, constituant alors un défaut préjudiciable à l'intégrité de ce dernier.

L'augmentation significative de la tension utilisée par les sources d'énergie des aéronefs est telle que les caractéristiques de volume, de poids et de coût de certains éléments des circuits électriques ne satisfont plus aux conditions d'utilisation à bord d'un aéronef. Ceci est notamment dû à des effets observés décrits par la loi de Paschen. La loi de Paschen permet de caractériser l'apparition d'un arc électrique lors de l'ouverture d'une ligne d'alimentation électrique en fonction de la pression atmosphérique autour du point d'ouverture de la ligne électrique, et donc en fonction de l'altitude d'utilisation.

La situation peut donc être améliorée.

Le document FR 2 953 324 A1 décrit un ensemble coupe-circuit électrique comprenant un élément conducteur d'un circuit électrique et un dispositif de sectionnement activable par un élément pyrotechnique, selon le préambule de la revendication 1.

### EXPOSE DE L'INVENTION

La présente invention vise notamment à fournir un ensemble coupe-circuit électrique permettant d'isoler rapidement une ligne d'alimentation électrique défectueuse dans un aéronef, avant que la surtension en présence ne puisse être transférée à d'autres éléments du circuit électrique comprenant cette ligne d'alimentation électrique, et tout en évitant d'avoir à surdimensionner des composants de l'installation électrique de l'aéronef.

A cet effet, l'invention a pour objet un ensemble coupe-circuit électrique comprenant un élément conducteur d'une ligne d'alimentation électrique d'un circuit électrique et un dispositif de coupure activable par un premier élément pyrotechnique et configuré pour sectionner l'élément conducteur en une zone de coupure prédéterminée délimitée par un point aval, l'ensemble coupe-circuit électrique comprenant en outre un élément contacteur activable par un deuxième élément pyrotechnique, l'élément contacteur étant configuré pour connecter le point aval de la zone de coupure prédéterminée à un conducteur de masse du circuit électrique, préalablement à un sectionnement de l'élément conducteur ou simultanément au sectionnement de l'élément conducteur.

Avantageusement, il est ainsi possible d'isoler une ligne d'alimentation électrique présentant un défaut électrique du reste du circuit électrique et de limiter ainsi la propagation de ce défaut électrique à d'autres éléments du circuit électrique.

L'ensemble coupe-circuit électrique selon l'invention peut également comporter les caractéristiques suivantes, considérées seules ou en combinaison :
- Le deuxième élément pyrotechnique et le premier élément pyrotechnique constituent un seul et même élément pyrotechnique.
- Le dispositif de coupure et le dispositif contacteur forment une même pièce ou sont agencés solidairement l'un de l'autre.

L'invention a également pour objet un système de protection électrique comprenant un détecteur de surintensité, encore appelé ici module de contrôle et un ensemble coupe-circuit électrique tel que précité.

Un autre objet de l'invention est un circuit électrique comprenant un tel ensemble coupe-circuit électrique ou un système de protection électrique comprenant un tel ensemble coupe-circuit électrique.

L'invention a également pour objet un aéronef comprenant un circuit électrique tel que précité.

Selon un mode de réalisation, l'aéronef comprend au moins un moyen de propulsion électrique.

L'invention concerne en outre un procédé de protection d'un circuit électrique d'un aéronef, le circuit électrique comprenant un élément conducteur d'un circuit et un dispositif de coupure (sectionnement) activable par un premier élément pyrotechnique et configuré pour sectionner l'élément conducteur en une zone de coupure prédéterminée délimitée par un point aval, l'ensemble coupe-circuit électrique comprenant en outre un dispositif contacteur activable par un deuxième élément pyrotechnique, l'élément contacteur étant configuré pour connecter le point aval de la zone de coupure à un conducteur de masse du circuit électrique, le procédé comprenant des étapes de :
- (i) détection d'un courant représentatif d'un courant supérieur à un seuil prédéterminé établi dans l'élément conducteur,
- (ii) connexion du point aval de la zone de coupure à un conducteur de masse du circuit électrique, et,
- (iii) sectionnement dudit élément conducteur en une zone de coupure prédéterminée.

Selon un mode de réalisation l'étape (iii) de sectionnement du conducteur est postérieure à l'étape (ii) de connexion par contact du point aval de la zone de coupure à un conducteur de masse du circuit électrique.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement une portion d'un circuit électrique comprenant un ensemble coupe-circuit électrique agencé entre une source d'énergie électrique et un élément consommateur d'énergie électrique selon un mode de réalisation ;
[Fig. 2] illustre schématiquement des détails d'implémentation de l'ensemble coupe-circuit électrique utilisé dans la portion de circuit électrique déjà représentée sur la Fig. 1, avant activation ;
[Fig. 3] illustre schématiquement un état de l'ensemble coupe-circuit électrique déjà représenté sur la Fig. 2, après activation d'un dispositif contacteur ;
[Fig. 4] illustre schématiquement un état de l'ensemble coupe-circuit électrique déjà représenté sur la Fig. 3, après activation d'un dispositif de sectionnement ;
[Fig. 5] illustre schématiquement une variante d'implémentation de l'ensemble coupe-circuit électrique déjà représenté sur la Fig. 2 ;
[Fig. 6] illustre schématiquement un état de l'ensemble coupe-circuit électrique déjà représenté sur la Fig. 5, après activation ;
[Fig. 7] illustre schématiquement des circuits de contrôle internes de l'ensemble coupe-circuit électrique déjà représenté sur la Fig. 2 ;
[Fig. 8] illustre schématiquement une variante des circuits de contrôle interne de l'ensemble coupe-circuit électrique déjà représenté sur la Fig. 2 ; et,
[Fig. 9] illustre schématiquement un aéronef comprenant un ensemble coupe-circuit électrique selon un mode de réalisation.

### EXPOSE DETAILLE DE MODES DE REALISATION

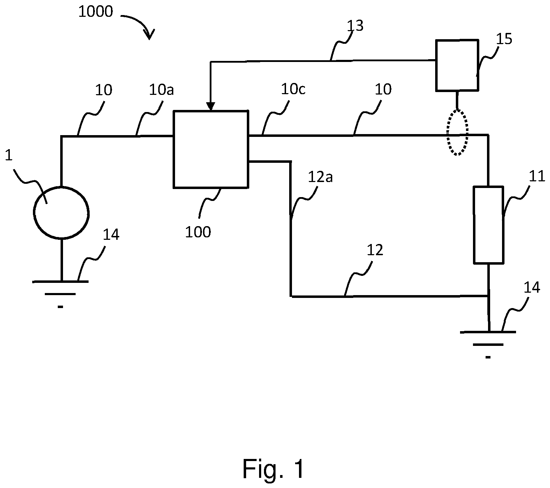

La Fig. 1 représente schématiquement une portion d'un circuit électrique 1000. Selon un mode de réalisation, le circuit électrique 1000 est un circuit électrique d'aéronef. La portion du circuit électrique 1000 représentée comprend une source d'énergie électrique 1 alimentant un élément consommateur d'énergie électrique 11 au travers d'une ligne d'alimentation électrique 10. La ligne d'alimentation électrique 10 est donc une ligne d'alimentation en énergie électrique de l'élément consommateur 11. L'élément consommateur d'énergie électrique 11 est un dispositif électrique quelconque encore appelé communément charge, récepteur ou récepteur de courant. Le circuit d'alimentation électrique de l'élément consommateur d'énergie électrique 11 est fermé par une connexion de la source d'énergie électrique 1 à une masse électrique 14 et une connexion de l'élément consommateur d'énergie électrique 11 à cette même masse électrique 14. La ligne électrique 10 comprend un ensemble coupe-circuit électrique 100 configuré pour pouvoir opérer, si besoin, une ouverture rapide de la ligne d'alimentation électrique 10 à un endroit prédéterminé par la position physique de l'ensemble coupe-circuit électrique 100, entre la source d'énergie électrique 1 et l'élément consommateur d'énergie électrique 11. L'ouverture de la ligne d'alimentation électrique 10 est requise notamment en cas de détection d'un défaut électrique tel que, par exemple, une surintensité dans cette ligne d'alimentation électrique. L'ensemble coupe-circuit électrique 100 est configuré pour être activé, c'est-à-dire pour être capable d'opérer une ouverture de la ligne électrique 10, à partir d'au moins un signal de contrôle porté par une ligne de contrôle 13. Le signal de contrôle 13 est délivré par un module de contrôle 15 du courant électrique présent et mesuré dans la ligne d'alimentation électrique 10. Le module de contrôle 15 opère comme un superviseur du courant électrique établi dans la ligne électrique 10 de sorte qu'en cas de surintensité dans la ligne électrique 10, le module de contrôle 15 délivre le signal d'activation 13 pour activer le coupe-circuit électrique 100 en vue de l'ouverture de la ligne d'alimentation électrique 10. Plus précisément, le module de contrôle 15 est prévu pour délivrer le signal d'activation 13 dès qu'il détecte que la valeur du courant mesuré dans la ligne d'alimentation électrique 10 est égale ou supérieure à une valeur seuil prédéterminée. Dans la présente description, on nomme indifféremment le signal d'activation 13 et le support physique portant ce signal, c'est-à-dire la ligne de contrôle 13. Le module de contrôle 15 opère une surveillance continue du courant électrique présent dans la ligne d'alimentation électrique 10.

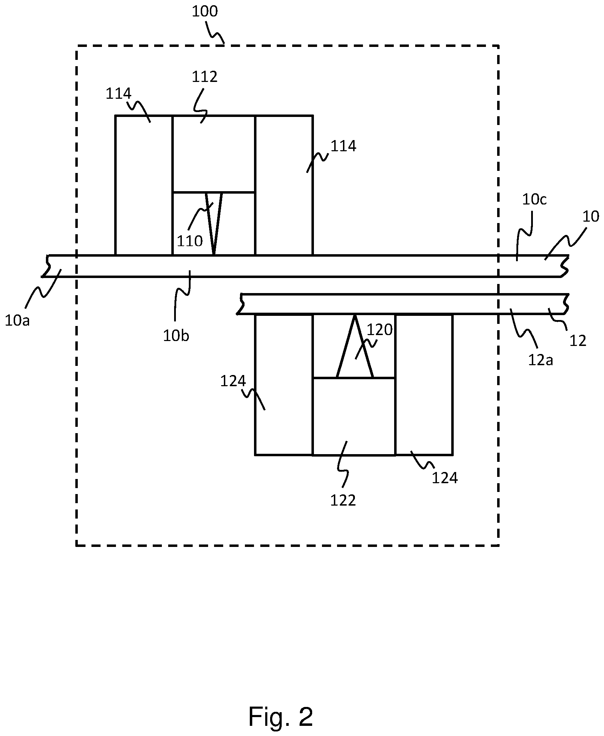

L'ensemble coupe circuit 100 est monté en série sur la ligne d'alimentation électrique 10 entre un premier point 10a de la ligne électrique 10, dit « point amont », et un deuxième point 10c de la ligne électrique 10, dit « point aval ». L'ensemble coupe-circuit électrique 100 est donc configuré pour opérer une ouverture de la ligne électrique dans une zone prédéterminée située entre ces deux points. Le terme « amont » est à interpréter ici comme signifiant disposé du côté de la source d'énergie électrique 1 par rapport à un point d'ouverture de la ligne d'alimentation électrique 10, mis en œuvre dans l'ensemble coupe-circuit électrique 100. A l'opposé, le terme « aval » est à interpréter comme signifiant disposé du côté opposé du point d'ouverture de la ligne d'alimentation électrique 10 par rapport à la source d'énergie électrique 1, c'est-à-dire disposé du côté de l'élément consommateur d'énergie électrique 11 par rapport à l'ensemble coupe-circuit électrique 100. Un conducteur de masse 12 relie une masse électrique 14 du circuit électrique 1000 à l'ensemble coupe-circuit électrique 100 en un point de connexion 12a. L'ensemble coupe-circuit électrique 100 comprend un dispositif contacteur interne 120 (non représenté sur la Fig.1 mais visible par exemple sur la Fig. 2) permettant de relier le point dit aval 10c de la ligne d'alimentation électrique 10 au point de connexion 12a du conducteur de masse 12, et donc conséquemment à la masse électrique 14 du circuit électrique 1000, ainsi qu'un dispositif de sectionnement interne 110 (non représenté sur la Fig. 1 mais également visible par exemple sur la Fig. 2) apte à sectionner physiquement la ligne électrique 10 dans une zone prédéterminée entre les points amont 10a et aval 10c, de sorte à opérer une ouverture électrique rapide de la ligne d'alimentation électrique 10. Avantageusement, il est ainsi possible de court-circuiter la ligne d'alimentation électrique 10 en présence d'un défaut qui survient en aval de l'ensemble coupe-circuit électrique 100, avant de déconnecter la ligne d'alimentation électrique 10 du reste du circuit électrique 1000. Cela permet de limiter la propagation d'une surtension ou d'une surintensité à d'autres éléments du circuit électrique 1000, notamment dans le cas critique d'une ligne électrique hautement inductive qui est donc susceptible de restituer beaucoup d'énergie lors de son ouverture. Le fait d'opérer un court-circuit de la ligne avant l'ouverture permet de rendre les performances de l'ensemble coupe-circuit électrique 100 indépendantes de la valeur d'inductance de la ligne d'alimentation électrique 10. Il est avantageusement possible de réduire l'énergie à dissiper dans l'arc électrique produit par une ouverture de la ligne d'alimentation électrique 10, et d'annuler la surtension aux points d'entrée de l'ensemble coupe-circuit électrique 100, et plus largement à l'ensemble des éléments du circuit électrique 1000.

Le terme « contacteur » doit être interprété dans toute la présente description comme un dispositif configuré pour opérer un contact, irréversible, entre un point de la ligne d'alimentation électrique 10 portant le dispositif coupe-circuit électrique 100, et un autre point du circuit électrique 1000 comprenant la ligne d'alimentation électrique 10. En l'espèce, le dispositif contacteur 120 est configuré ici pour établir un contact électrique direct entre le point aval 10c de la ligne d'alimentation électrique 10 et un point du conducteur de masse 12 à proximité immédiate du point aval 10c. En d'autres termes, le dispositif contacteur 120 opère comme un dispositif contacteur mais aussi comme un dérivateur, configuré et utilisé pour dériver l'énergie présente dans la ligne d'alimentation électrique 10 vers le conducteur de masse 12 et donc finalement vers la masse 14 du circuit électrique 1000, après établissement d'un contact entre ces éléments.

Selon un mode de réalisation, le dispositif contacteur 120 et le dispositif de sectionnement de ligne 110, internes à l'ensemble coupe-circuit électrique 100, sont tous deux configurés pour être activables grâce à des moyens pyrotechniques qui permettent une grande réactivité en cas d'apparition d'un défaut sur la ligne d'alimentation électrique 10.

Le circuit de contrôle de courant 15 peut opérer par mesure directe ou indirecte. Dans le cas d'une mesure directe, le courant mesuré dans la ligne d'alimentation électrique 10 circule dans le dispositif de contrôle 15, lequel comprend une résistance shunt ou un transistor. Selon une variante, une mesure indirecte du courant dans la ligne d'alimentation électrique 10 est utilisée et le dispositif de contrôle 15 comprend alors un système d'isolation galvanique entre la ligne d'alimentation électrique 10 et ses moyens de mesure interne. Selon cette variante, un paramètre représentatif du courant établi dans la ligne d'alimentation 10 est mesuré, tel que, par exemple, le champ magnétique induit par ce courant dans une bobine.

La Fig. 2 illustre schématiquement un principe d'implémentation de l'ensemble coupe-circuit électrique 100. L'ensemble coupe-circuit électrique 100 comprend un élément conducteur 10b qui relie les points amont 10a et aval 10c de la ligne d'alimentation électrique 10. Les points amont 10a et aval 10c comprennent avantageusement chacun des éléments de connexion électromécaniques (non représentés sur la figure), tels que, par exemple, une borne à vis, un moyen de sertissage, ou un quelconque équivalent configuré pour le raccordement en série de l'ensemble coupe-circuit électrique 100 sur la ligne d'alimentation électrique 10. Un coupe-circuit pyrotechnique est agencé en regard du conducteur 10b. Le coupe-circuit pyrotechnique est principalement composé du dispositif de sectionnement 110 réalisé en matériau isolant et d'un élément pyrotechnique 112 logé dans un corps 114. Ce coupe-circuit pyrotechnique est activable à partir d'un signal extérieur délivré par un module de contrôle. Ce signal, non représenté sur la Fig.2 à des fins de simplification, est le signal d'activation 13 visible sur la Fig. 1. Lorsque le signal d'activation 13 est contrôlé de sorte à présenter son état actif, une solution pyrotechnique de l'élément pyrotechnique 112 est mise à feu de sorte à activer le dispositif de sectionnement 110 mu par le déplacement d'un piston dans une chambre du corps 114. Lorsque le dispositif de sectionnement 110 est déplacé par suite de la mise à feu de l'élément pyrotechnique 112, le dispositif de sectionnement 110 sectionne physiquement le conducteur 10b, en un point de coupure prédéterminé, c'est-à-dire en regard du dispositif de sectionnement 110, et en tout état de cause, entre le point amont 10a et le point aval 10c de la ligne d'alimentation électrique 10. Si un tel sectionnement, irréversible, est très rapide, c'est-à-dire en quelques millisecondes, l'ouverture brutale de la ligne d'alimentation électrique 10, par essence toujours plus ou moins inductive, est de nature à générer un arc électrique qu'il convient de maîtriser au mieux, sauf à compromettre l'efficacité et l'intégrité de l'ensemble coupe-circuit électrique 100. Cela est d'autant plus vrai dans le contexte d'un aéronef, où des variations de pression peuvent se présenter autour de l'ensemble coupe-circuit électrique 100 et à l'intérieur de celui-ci. Avantageusement, et aux fins de maîtriser au mieux l'ouverture voulue rapide de la ligne d'alimentation électrique 10 par le biais du sectionnement du conducteur 10b, le dispositif contacteur 120 est utilisé à proximité du dispositif de sectionnement 110. Le dispositif contacteur 120 est agencé et configuré pour comprimer, voire écraser, une portion du conducteur de masse 12, reliant l'ensemble coupe-circuit 100 à une masse 14 du circuit électrique 100, de sorte à court-circuiter la ligne d'alimentation électrique 10. Un tel court-circuit est opéré en connectant le point aval 10c de la ligne d'alimentation 10 au conducteur 12 de mise à la masse. Pour opérer le contact électrique, un dispositif contacteur 120, fabriqué préférentiellement en matériau conducteur, est astucieusement mu, lui aussi, par un élément pyrotechnique 122, comprenant une solution pyrotechnique. Avantageusement et selon un mode de réalisation préféré, le dispositif contacteur 120 est activé préalablement à l'activation du dispositif de coupure 110. Ce séquencement est opéré par une mise à feu de l'élément pyrotechnique 122 avant une mise à feu de l'élément pyrotechnique 112. Selon un mode de réalisation de l'invention, le délai entre les deux mises à feu est fixe et calibré à la fabrication de l'ensemble coupe-circuit électrique 100. Ce délai peut être déterminé par un circuit de contrôle visant à retarder le signal d'activation de l'élément pyrotechnique 112 par rapport au signal d'activation de l'élément pyrotechnique 122. Bien évidemment, les dispositifs de sectionnement 110 et contacteur 120 sont agencés de sorte que l'activation de l'un ne compromette aucunement l'intégrité de l'autre préalablement à son activation. Classiquement, le dispositif de sectionnement 110 comprend un point de sectionnement configuré pour opérer une coupe selon une section du conducteur 10b, dans une chambre de coupure délimitée par le corps 124 comprenant des éléments ferromagnétiques disposés et des moyens de contrôle de la vitesse du piston dans la chambre de combustion, etc. Le dispositif contacteur 120 opère selon un principe similaire, hormis que le dispositif contacteur 120 est configuré non pas pour sectionner la portion de conducteur 12 disposé face à lui, mais pour venir comprimer, voire écraser, cette portion de conducteur sur le conducteur 10c de la ligne d'alimentation 10, et établir en conséquence un contact électrique suffisant pour une mise en court-circuit de la ligne d'alimentation électrique 10. Les détails d'implémentation des éléments pyrotechniques 112 et 122, respectivement agencés dans les corps 114 et 124 ne sont pas décrits ici plus encore dans la mesure où ils ne sont pas utiles à la compréhension de l'invention.

Selon une variante d'implémentation, les signaux d'activation des éléments pyrotechniques 112 et 122 sont distincts et contrôlés indépendamment l'un de l'autre. Avantageusement, il est ainsi possible pour un contrôleur d'activation externe, tel que le module de contrôle 15 représenté sur la Fig. 1, de définir le délai prédéterminé entre les deux mises à feu respectives des deux éléments pyrotechniques 112 et 122. Selon cette variante, deux signaux d'activation sont alors connectés entre le module de contrôle 15 et l'ensemble coupe-circuit électrique 100.

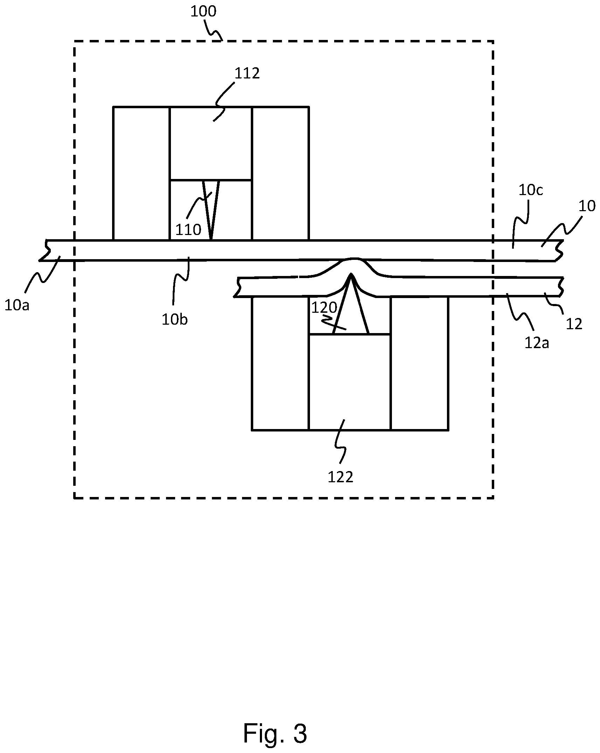

La Fig. 3 illustre un premier état interne de l'ensemble coupe-circuit électrique 100 après activation du dispositif contacteur 120 et avant activation du dispositif de sectionnement 110. Il est possible de constater le contact électrique établi entre le conducteur 12 et le point 10c de la ligne d'alimentation électrique 10.

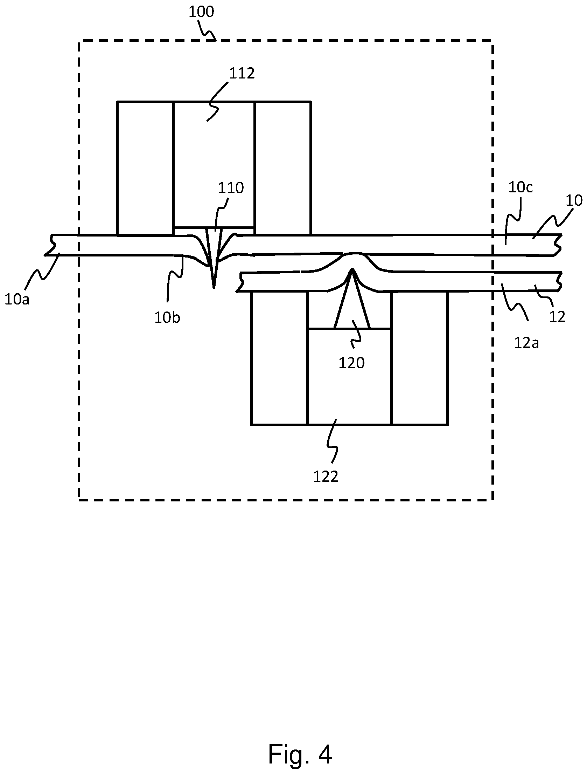

La Fig. 4 illustre un deuxième état interne de l'ensemble coupe-circuit électrique 100 après activation du dispositif contacteur 120 et après activation subséquente du dispositif de sectionnement 110. Il est possible de constater, outre le contact électrique établi entre le conducteur 12 et le point 10c de la ligne d'alimentation électrique 10, l'ouverture électrique de la ligne d'alimentation 10 par sectionnement physique du conducteur 10c en regard du dispositif de sectionnement 110.

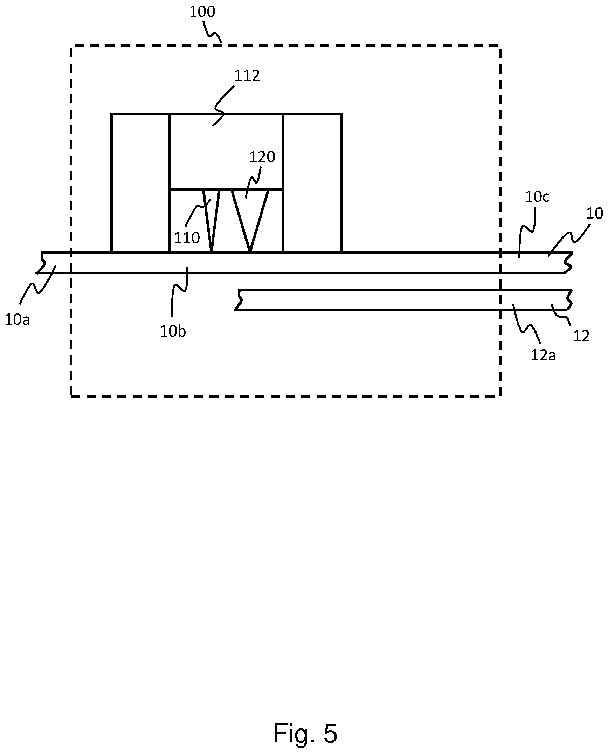

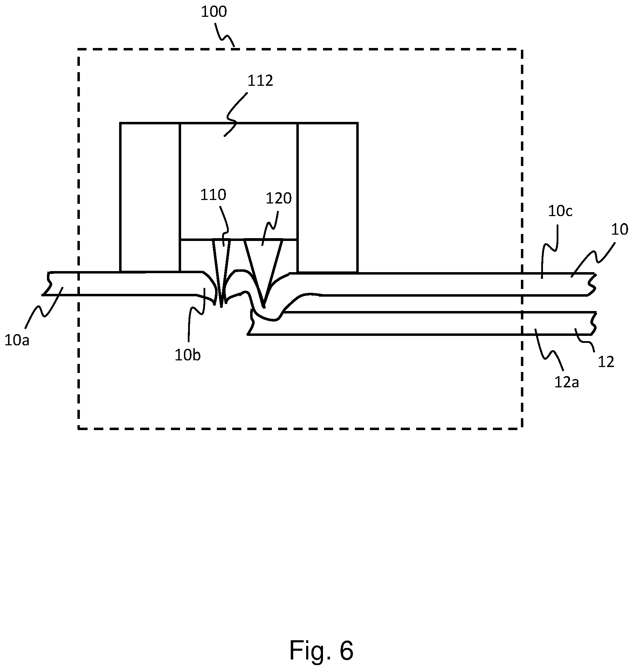

La Fig. 5 illustre schématiquement une variante d'implémentation de l'ensemble coupe-circuit électrique 100 selon laquelle les dispositifs de sectionnement 110 et contacteur 120 sont agencés en une pièce unique ou en deux éléments montés solidairement l'un de l'autre, mus par la mise à feu d'un seul et unique élément pyrotechnique 112. Bien évidemment, selon cette variante, un seul signal d'activation est utilisé pour activer l'établissement d'un court-circuit entre le conducteur 10c et le conducteur de masse 12, et pour activer l'ouverture rapide de la ligne d'alimentation électrique 10, par sectionnement physique du conducteur 10c. Si la structure de l'ensemble coupe-circuit 100 en est simplifiée, ce qui rend la fabrication de l'ensemble coupe-circuit électrique 100 plus aisée et moins coûteuse, la maîtrise du séquencement des opérations de court-circuit d'abord, puis d'ouverture de la ligne d'alimentation électrique, est plus complexe. En effet, seul l'agencement mécanique des dispositifs de sectionnement 110 et contacteur 120 permet de créer un court-circuit d'abord puis sectionnement, par exemple, si le dispositif contacteur 120 présente une forme en saillie plus conséquente que le dispositif de sectionnement 110. La Fig. 6 illustre schématiquement un état interne de l'ensemble coupe-circuit électrique 100 après activation et dans la variante d'implémentation selon laquelle le coupe-circuit électrique 100 ne comprend qu'un seul élément pyrotechnique 112. On peut observer le contact établi par compression ou écrasement entre le conducteur 10c et le conducteur 12, opéré par le dispositif contacteur 120, ainsi que l'ouverture du conducteur 10b par sectionnement, et donc de la ligne d'alimentation électrique 10, sous l'effet du sectionnement physique du conducteur 10b opéré par le dispositif de sectionnement 110 fabriqué en matériau isolant. Selon cette variante, les deux dispositifs de sectionnement 110 et contacteur 120, sont mis en mouvement par suite de la mise à feu du seul et même élément pyrotechnique 112.

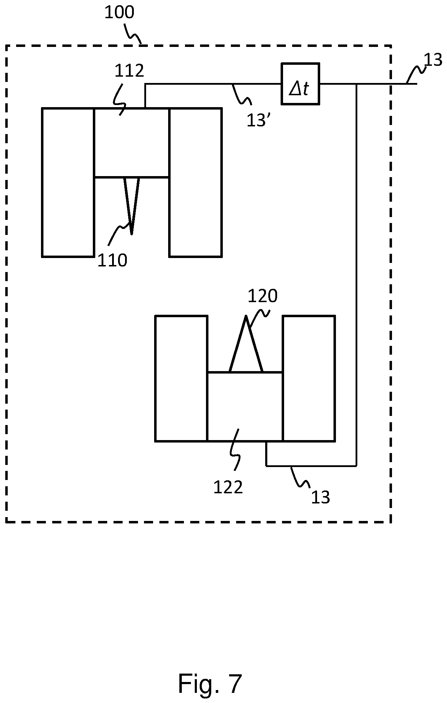

La Fig. 7 illustre schématiquement un circuit d'activation interne des éléments pyrotechniques 122 puis 112 comprenant un module de retard *Δt* qui permet de définir un délai prédéterminé entre l'activation de l'élément pyrotechnique 122 et l'activation subséquente de l'élément pyrotechnique 112. Le module de retard *Δt* comprend un circuit de retardement définissant un retard de propagation, par exemple à partir de la combinaison d'un composant résistif et d'un composant capacitif. Selon le mode de réalisation représenté, un seul signal d'activation est utilisé, en provenance d'un élément externe à l'ensemble coupe-circuit électrique 100, tel que le module de contrôle et d'activation 15 représenté sur la Fig. 1.

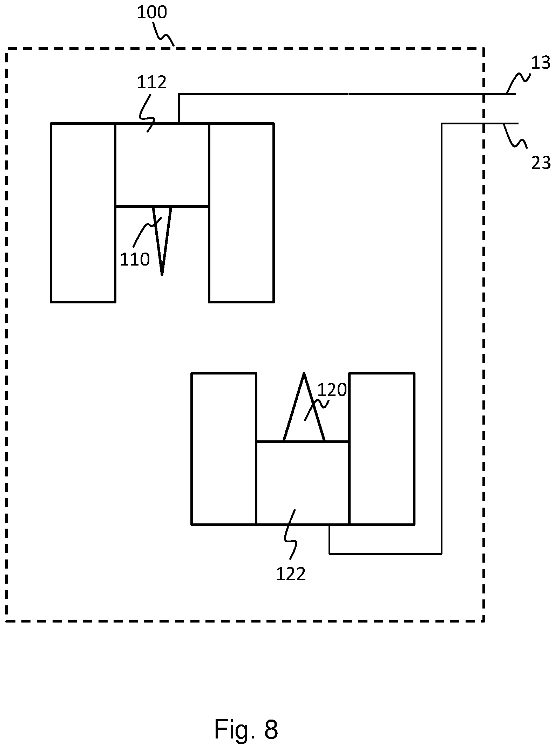

La Fig. 8 illustre schématiquement un circuit d'activation interne des éléments pyrotechniques 122 puis 112 sans module de retard interne qui permette de définir un délai prédéterminé entre l'activation de l'élément pyrotechnique 122 et l'activation subséquente de l'élément pyrotechnique 112. Selon cette configuration, deux signaux d'activation indépendants 13 et 23 sont connectés entre le module de contrôle 15 et l'ensemble coupe-circuit électrique 100. Selon cet exemple de réalisation, le module de contrôle 100 définit le délai entre la mise à feu de l'élément pyrotechnique 122 et la mise à feu de l'élément pyrotechnique 112. Ce délai peut être fixe ou déterminé en fonction d'un critère, tel que, par exemple, le potentiel électrique mesuré par le module de contrôle 15 de la ligne d'alimentation électrique 10, ou encore le courant établi dans la ligne d'alimentation électrique 10, mesuré par le module de contrôle 15.

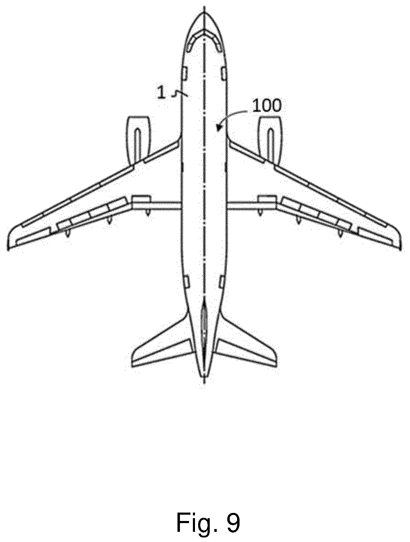

La Fig. 9 illustre un aéronef 1 comprenant la portion de circuit électrique 1000 déjà décrite et au moins un ensemble coupe-circuit électrique 100 implémenté selon l'un des modes de réalisation précédemment décrits.

Avantageusement, il est possible de maîtriser rapidement un défaut détecté sur la ligne électrique 10 de l'aéronef 1 grâce à la mise en œuvre du coupe-circuit électrique 100 et d'isoler la ligne électrique 10 du reste du circuit électrique de l'aéronef, rapidement et en maîtrisant les phénomènes d'arc électrique de façon améliorée.

L'invention ne se limite pas aux seuls modes de réalisation et exemples décrits ci-avant, mais concerne plus généralement tout ensemble coupe-circuit électrique comprenant un dispositif de sectionnement d'une ligne d'alimentation électrique ainsi qu'un dispositif contacteur configuré pour opérer un court-circuit entre un point de la ligne d'alimentation électrique, en aval du point de sectionnement, et une masse ou un conducteur de masse du circuit électrique qui comprend l'ensemble coupe-circuit électrique.

## Revendications

1. Ensemble coupe-circuit électrique (100) comprenant un élément conducteur (10b) d'un circuit électrique (1000) et un dispositif de sectionnement (110) activable par un premier élément pyrotechnique (112) et configuré pour sectionner ledit élément conducteur (10) en une zone de coupure prédéterminée (10b) délimitée par un point aval (10c), ledit ensemble coupe-circuit électrique (100) étant **caractérisé en ce qu'**il comprend en outre un élément contacteur (120) activable par un deuxième élément pyrotechnique (122), l'élément contacteur (120) étant configuré pour connecter ledit point aval (10c) de la zone de coupure à un conducteur de masse (12) dudit circuit électrique (1000), préalablement à un sectionnement dudit premier conducteur (10b) ou simultanément au sectionnement dudit conducteur (10b).

2. Ensemble coupe-circuit électrique (100) selon la revendication 1, dans lequel le deuxième élément pyrotechnique (122) et le premier élément pyrotechnique (112) constituent un seul et même élément pyrotechnique.

3. Ensemble coupe-circuit électrique selon la revendication 2, dans lequel le dispositif de coupure (110) et le dispositif contacteur (120) forment une même pièce ou sont agencés solidairement l'un de l'autre.

4. Système de protection électrique comprenant un module de contrôle (15), détecteur de surintensité, et un ensemble coupe-circuit électrique (100) selon l'une quelconque des revendications précédentes.

5. Circuit électrique (1000) comprenant un ensemble coupe-circuit électrique (100) selon l'une des revendications 1 à 3 ou un système de protection électrique selon la revendication 4.

6. Aéronef (1) comprenant un circuit électrique (1000) selon la revendication 5.

7. Aéronef (1) selon la revendication précédente comprenant au moins un moyen de propulsion électrique.

8. Procédé de protection d'un circuit électrique (1000) d'un aéronef (1), le circuit électrique (1000) comprenant un élément conducteur (10b) d'un circuit et un dispositif de sectionnement (110) activable par un premier élément pyrotechnique (112) et configuré pour sectionner ledit élément conducteur (10b) en une zone de coupure prédéterminée délimitée par un point aval (10c), ledit ensemble coupe-circuit électrique (100) étant **caractérisé en ce qu'**il comprend en outre un élément contacteur (120) activable par un deuxième élément pyrotechnique (122), l'élément contacteur (120) étant configuré pour connecter ledit point aval (10c) de la zone de coupure à un conducteur de masse (12) dudit circuit électrique (1000), ledit procédé comprenant des étapes de :
- (i) détection d'un courant représentatif d'un courant supérieur à un seuil prédéterminé établi dans ledit élément conducteur (10),
- (ii) connexion dudit point aval (10c) de la zone de coupure à un conducteur de masse (12) dudit circuit électrique (1000), et,
- (iii) sectionnement dudit élément conducteur (10b) en une zone de coupure prédéterminée.

9. Procédé de protection d'un circuit électrique (1000) selon la revendication précédente, dans lequel l'étape (iii) de sectionnement dudit conducteur (10b) est postérieure à l'étape (ii) de connexion dudit point aval (10c) de la zone de coupure à un conducteur de masse (12) dudit circuit électrique (1000).

## Patentansprüche

1. Elektrische Schalteranordnung (100), umfassend ein leitendes Element (10b) eines Stromkreises (1000) und eine Trennvorrichtung (110), die durch ein erstes pyrotechnisches Element (112) aktivierbar ist und dazu ausgestaltet ist, das leitende Element (10) in einem vorbestimmten Durchtrennungsbereich (10b) zu trennen, der durch einen nachgelagerten Punkt (10c) begrenzt wird, wobei die elektrische Schalteranordnung (100) **dadurch gekennzeichnet ist, dass** sie ferner ein Kontaktelement (120) umfasst, das durch ein zweites pyrotechnisches Element (122) aktivierbar ist, wobei das Kontaktelement (120) dazu ausgestaltet ist, den nachgelagerten Punkt (10c) des Durchtrennungsbereichs mit einem Masseleiter (12) des Stromkreises (1000) vor einer Trennung des ersten Leiters (10b) oder gleichzeitig mit der Trennung des Leiters (10b) zu verbinden.

2. Elektrische Schalteranordnung (100) nach Anspruch 1, wobei das zweite pyrotechnische Element (122) und das erste pyrotechnische Element (112) ein und dasselbe pyrotechnische Element darstellen.

3. Elektrische Schalteranordnung nach Anspruch 2, wobei die Durchtrennungsvorrichtung (110) und die Kontaktvorrichtung (120) dasselbe Teil bilden oder fest aneinander angeordnet ist.

4. Elektrisches Schutzsystem, umfassend ein überstromdetektierendes Überwachungsmodul (15) und eine elektrische Schalteranordnung (100) nach einem der vorhergehenden Ansprüche.

5. Stromkreis (1000), umfassend eine elektrische Schalteranordnung (100) nach einem der Ansprüche 1 bis 3 oder ein elektrisches Schutzsystem nach Anspruch 4.

6. Flugzeug (1), umfassend einen Stromkreis (1000) nach Anspruch 5.

7. Flugzeug (1) nach dem vorhergehenden Anspruch, umfassend mindestens eine elektrische Antriebseinrichtung.

8. Verfahren zum Schützen eines Stromkreises (1000) eines Flugzeugs (1), der Stromkreis (1000) umfassend ein leitendes Element (10b) eines Kreises und eine Trennvorrichtung (110), die durch ein erstes pyrotechnisches Element (112) aktivierbar ist und dazu ausgestaltet ist, das leitende Element (10b) in einem vorbestimmten Durchtrennungsbereich zu trennen, der durch einen nachgelagerten Punkt (10c) begrenzt wird, wobei die elektrische Schalteranordnung (100) **dadurch gekennzeichnet ist, dass** sie ferner ein Kontaktelement (120) umfasst, das durch ein zweites pyrotechnisches Element (122) aktivierbar ist, wobei das Kontaktelement (120) dazu ausgestaltet ist, den nachgelagerten Punkt (10c) des Durchtrennungsbereichs mit einem Masseleiter (12) des Stromkreises (1000) zu verbinden, wobei das Verfahren Schritte umfasst zum:
- (i) Detektieren eines Stroms, der repräsentativ für einen Strom oberhalb eines vorbestimmten Schwellenwerts ist, der in dem leitenden Element (10) fließt,
- (ii) Verbinden des nachgelagerten Punkts (10c) des Durchtrennungsbereichs mit einem Masseleiter (12) des Stromkreises (1000), und,
- (iii) Trennen des leitenden Elements (10b) in einem vorbestimmten Durchtrennungsbereich.

9. Verfahren zum Schützen eines Stromkreises (1000) nach dem vorhergehenden Anspruch, wobei der Schritt (iii) des Trennens des Leiters (10b) nach dem Schritt (ii) des Verbindens des nachgelagerten Punkts (10c) des Durchtrennungsbereichs mit einem Masseleiter (12) des Stromkreises (1000) erfolgt.

## Claims

1. Electrical circuit breaker assembly (100) comprising a conductive element (10b) of an electrical circuit (1000) and a severing device (110) that can be activated by a first pyrotechnic element (112) and that is configured to sever said conductive element (10) in a predetermined cut-off zone (10b) delimited by a downstream point (10c), said electrical circuit breaker assembly (100) being **characterized in that** it further comprises a contactor element (120) that can be activated by a second pyrotechnic element (122), the contactor element (120) being configured to connect said downstream point (10c) of the cut-off zone to an earth conductor (12) of said electrical circuit (1000) prior to a severing of said first conductor (10b) or simultaneously with the severing of said conductor (10b).

2. Electrical circuit breaker assembly (100) according to Claim 1, wherein the second pyrotechnic element (122) and the first pyrotechnic element (112) constitute one and the same pyrotechnic element.

3. Electrical circuit breaker assembly according to Claim 2, wherein the cut-off device (110) and the contactor device (120) form one and the same part or are arranged integrally with each other.

4. Electrical protection system comprising a control module (15), an overcurrent detector and an electrical circuit breaker assembly (100) according to any one of the preceding claims.

5. Electrical circuit (1000) comprising an electrical circuit breaker assembly (100) according to one of Claims 1 to 3 or an electrical protection system according to Claim 4.

6. Aircraft (1) comprising an electrical circuit (1000) according to Claim 5.

7. Aircraft (1) according to the preceding claim comprising at least one means of electric propulsion.

8. Method for protecting an electrical circuit (1000) of an aircraft (1), the electrical circuit (1000) comprising a conductive element (10b) of a circuit and a severing device (110) that can be activated by a first pyrotechnic element (112) and that is configured to sever said conductive element (10b) in a predetermined cut-off zone delimited by a downstream point (10c), said electrical circuit breaker assembly (100) being **characterized in that** it further comprises a contactor element (120) that can be activated by a second pyrotechnic element (122), the contactor element (120) being configured to connect said downstream point (10c) of the cut-off zone to an earth conductor (12) of said electrical circuit (1000), said method comprising steps of:
- (i) detecting a current that is representative of a current greater than a predetermined threshold established in said conductive element (10),
- (ii) connecting said downstream point (10c) of the cut-off zone to an earth conductor (12) of said electrical circuit (1000), and
- (iii) severing said conductive element (10b) in a predetermined cut-off zone.

9. Method for protecting an electrical circuit (1000) according to the preceding claim, wherein step (iii) of severing said conductor (10b) is after step (ii) of connecting said downstream point (10c) of the cut-off zone to an earth conductor (12) of said electrical circuit (1000).
